# EUROPEAN PATENT APPLICATION

(11) **EP 4 299 226 A1**
(43) Date of publication of application: **03.01.2024**
(21) Application number: 22759407.4
(22) Date of filing: 14.02.2022
(51) Int. Cl.: B23H 7/02, B23H 7/10

(54) **WIRE-BREAKAGE POSITION ESTIMATION DEVICE AND WIRE-BREAKAGE POSITION ESTIMATION METHOD**

(30) Priority: 26.02.2021 JP 2021030797
(71) Applicant: FANUC CORPORATION, Oshino-mura Minamitsuru-gun Yamanashi 401-0597 (JP)
(72) Inventor: WATANABE, Daiki, Minamitsuru-gun, Yamanashi 401-0597 (JP)
(74) Representative: Schicker, Silvia
(86) International application number: PCT/JP2022/005533
(87) International publication number: WO 2022/181368

(57) **Abstract**

A wire-breakage position estimation device (58) comprising: a torque acquisition unit (70) which acquires a torque (Tq) of a take-up motor (52); a determination unit (72) which determines whether or not a rear end (12a) of a wire electrode (12) has passed a take-up roller (48); a rotation angle acquisition unit (74) which acquires a rotation angle (ARO) of the take-up motor (52); and a wire-breakage position estimation unit (76) which estimates a wire-breakage position (PBR) in the wire electrode (12) on the basis of the rotation angle (ARO) acquired from when wire-breakage has occurred in the wire electrode (12) to when the rear end (12a) has been determined to have passed the take-up roller (48).

## Description

### TECHNICAL FIELD

The present invention relates to a wire electric discharge machine, and more particularly to a wire-breakage position estimation device and a wire-breakage position estimation method for estimating a position of breakage of a wire electrode.

### BACKGROUND ART

JP 2019-217559 A discloses a prior art relating to a wire electric discharge machine. The purpose of the prior art is to calculate a position of breakage of a wire electrode. JP 2019-217559 A discloses a tip detection electrode according to the prior art. The tip detection electrode is installed on the wire electrode transfer path. The tip detection electrode comes into contact with the wire electrode. The voltage of the tip detection electrode changes according to whether the tip detection electrode and the wire electrode are in contact with each other.

The tip detection electrode according to the prior art is installed upstream of the position of breakage of the wire electrode. The wire electrode is wound back when breakage occurs. Here, the prior art detects the position where the wire electrode to be wound back does not come into contact with the tip detection electrode, based on the change in the tip detection electrode voltage. That is, the prior art detects the tip position of the wire electrode, based on the change in the tip detection electrode voltage. Further, the prior art calculates the position of breakage of the wire electrode based on the position of the tip of the wire electrode and the amount of winding of the wire electrode.

### SUMMARY OF THE INVENTION

JP 2019-217559 A has at least the following problems. That is, an operator must install the tip detection electrode on the transfer path of the wire electrode. In other words, the number of steps in the operator's setup work increases. In addition, when the wire electrode is broken upstream of the tip detection electrode, the tip of the wire electrode is already upstream of the tip detection electrode at the time when the winding starts. Therefore, the tip of the wire electrode to be wound cannot reach the tip detection electrode. Therefore, JP 2019-217559 cannot calculate the position of breakage. Further, in order to detect the tip of the wire electrode, the wire electrode must be wound back in a direction opposite to the direction of feeding - the wire electrode must run the other way round. When the wire electrode runs backwards, the wire electrode could be tangled up.

The present invention aims to provide a wire-breakage position estimation device and a wire-breakage position estimation method that reliably estimate the position of breakage of a wire electrode without a tip detection electrode.

A first aspect of the present invention is a wire-breakage position estimation device for estimating a breakage position of a wire electrode in a wire electric discharge machine, wherein the wire electric discharge machine includes a winding roller that winds the wire electrode that has been fed out toward the workpiece and has passed through the workpiece, a winding motor that drives the winding roller, and a sensor that outputs a detection signal corresponding to the driving of the shaft of the winding motor, wherein the wire-breakage position estimation device includes a torque acquisition unit that acquires the torque of the winding motor based on the detection signal, a determination unit that determines, when the wire electrode is broken, based on the torque whether the rear end of the wire electrode wound by the winding roller has passed the winding roller, a rotation angle acquisition unit that acquires the rotation angle of the winding motor based on the detection signal, and a wire-breakage position estimation unit that estimates the breakage position of the wire electrode based on the rotation angle of the winding motor from a time when the wire electrode is broken to a time when it is determined that the rear end of the wire electrode has passed the winding roller.

A second aspect of the present invention is a wire-breakage position estimation method for estimating a breakage position of a wire electrode in a wire electric discharge machine, wherein the wire electric discharge machine includes a winding roller that winds the wire electrode that has been fed out toward the workpiece and has passed the workpiece, a winding motor that drives the winding roller, and a sensor that outputs a detection signal corresponding to the driving of the shaft of the winding motor, and the wire-breakage position estimation method includes a rotation angle acquisition step for acquiring the rotation angle of the winding motor based on the detection signal of the sensor, a torque acquisition step for acquiring the torque of the winding motor based on the detection signal of the sensor, a determination step for determining, when the wire electrode is broken, based on the torque whether the rear end of the wire electrode wound by the winding roller has passed the winding roller, and a wire-breakage position estimation step for estimating the breakage position of the wire electrode based on the rotation angle of the winding motor from a time when the wire electrode is broken to a time when it is determined that the rear end of the wire electrode has passed the winding roller.

According to an aspect of the present invention, provided are a wire-breakage position estimation device and a wire-breakage position estimation method that can reliably estimate a breakage position of a wire electrode without a tip detection electrode.

### BRIEF DESCRIPTION OF DRAWINGS

FIG. 1 is a configuration diagram of a wire electric discharge machine according to an embodiment;
FIG. 2 is a configuration diagram of a feed mechanism according to an embodiment;
FIG. 3 is a configuration diagram of a wire-breakage position estimation device according to an embodiment;
FIG. 4A is an exemplary diagram illustrating a feed mechanism when a wire electrode is broken; FIG. 4B is an exemplary diagram illustrating the feed mechanism after time has elapsed from FIG. 4A and a broken wire electrode has passed a winding roller and a pinch roller;
FIG. 5 is an exemplary graph illustrating in a simple manner the change in torque of the winding motor between before and after the rear end of the wire electrode passes the winding roller;
FIG. 6 is an exemplary flowchart illustrating a flow of a wire-breakage position estimation method according to an embodiment;
FIG. 7 is a configuration diagram of a wire-breakage position estimation device according to a first modified example;
FIG. 8 is an exemplary diagram illustrating a plurality of sections defined on a feeding path of a wire electrode;
FIG. 9 is an exemplary diagram illustrating a table defining the relationship of a plurality of sections of FIG. 8 with causes of breakage that may occur in each section and countermeasures; and
FIG. 10 is an exemplary flowchart illustrating a flow of the wire-breakage position estimation method according to the first modified example.

### DETAILED DESCRIPTION OF THE INVENTION

Hereinafter, preferred embodiments of the wire-breakage position estimation device and the wire-breakage position estimation method of the present invention will be described in detail with reference to the accompanying drawings.

### [Embodiment]

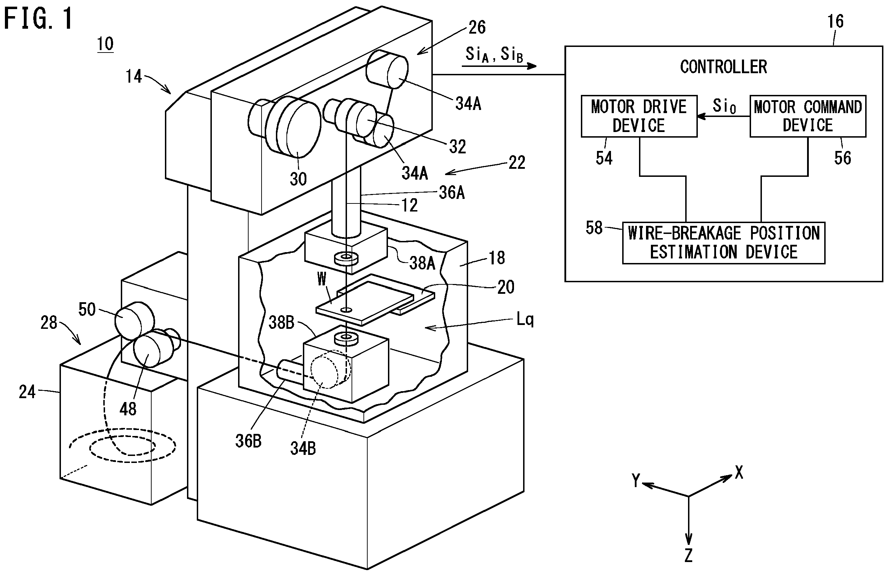

FIG. 1 is a configuration diagram of a wire electric discharge machine 10 according to an embodiment.

FIG. 1 shows not only the wire electric discharge machine 10 but also an X-axis line, a Y-axis line, and a Z-axis line. The X-axis line, the Y-axis line, and the Z-axis line are orthogonal to each other. In this embodiment, the X-axis line and the Y-axis line are axes parallel to the horizontal plane. In this embodiment, the term "horizontal direction" refers to the XY direction unless otherwise specified. In the present embodiment, the Z-axis line is an axis parallel to the gravity direction.

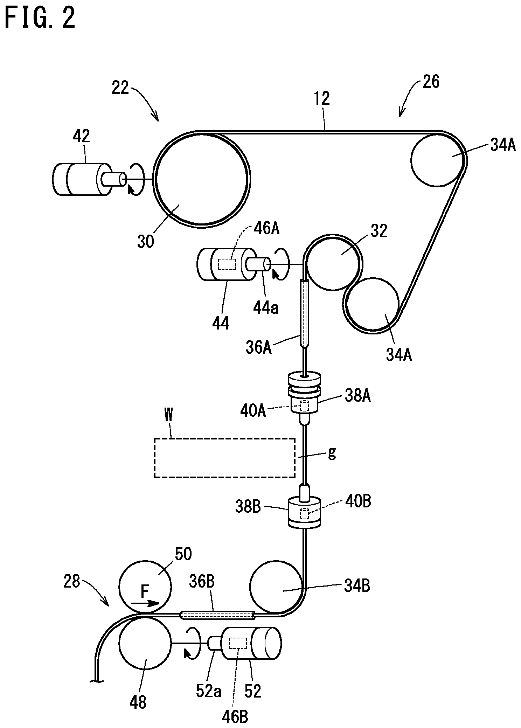

The wire electric discharge machine 10 is an industrial machine for performing electric discharge machining on a workpiece W by generating electric discharge in an interelectrode gap g (see FIG. 2) formed between a wire electrode 12 and the workpiece W. The wire electric discharge machine 10 includes a machine main body 14 and a controller 16. The machine main body 14 performs electric discharge machining. The controller 16 controls the machine main body 14.

The machine main body 14 includes a work-pan 18, a table (movable pedestal) 20, a feed mechanism 22, and a collecting box 24. The work-pan 18 stores dielectric working fluid Lq. The dielectric working fluid Lq has dielectricity. For example, the dielectric working fluid Lq is deionized water.

The table 20 is a pedestal for supporting the workpiece W. The table 20 is installed in the work-pan 18. The table 20 is movable along the horizontal direction. The movable table 20 is produced based on known techniques.

FIG. 2 is a configuration diagram of the feed mechanism 22 according to the embodiment.

The feed mechanism 22 is a mechanism for feeding out the wire electrode 12 along a predetermined feeding path. The wire electrode 12 is fed via a wire bobbin 30, a feed roller 32, an upper wire guide 38A, a workpiece W, a lower wire guide 38B, and a winding roller 48 in this order - this is the feeding path of the wire electrode 12. The wire bobbin 30, the feed roller 32, the upper wire guide 38A, the workpiece W, the lower wire guide 38B, and the winding roller 48 will be described in detail later. The feed mechanism 22 includes a supply system 26 and a collecting system 28. The supply system 26 supplies the wire electrode 12 to the workpiece W. The collecting system 28 collects the wire electrode 12 that has passed through the workpiece W.

In FIG. 2, the table 20 for supporting the workpiece W is not shown. Further, the wire electrode 12 and the workpiece W in FIG. 2 are drawn side by side. Generally, however, the wire electrode 12 passes through a hole that penetrates the workpiece W (see FIG. 1).

The supply system 26 includes a wire bobbin 30, a feed roller 32, two auxiliary rollers 34A, an upper pipe die 36A, and an upper wire guide 38A. The wire bobbin 30 is a rotatable bobbin. The wire electrode 12 is wound around the wire bobbin 30 so as to be able to be drawn out. Each of the feed roller 32 and the two auxiliary rollers 34A is a rotatable roller. The wire electrode 12 drawn out from the wire bobbin 30 is laid over the feed roller 32. The two auxiliary rollers 34A are disposed between the wire bobbin 30 and the feed roller 32. The two auxiliary rollers 34A suppress deflection of the wire electrode 12. The upper pipe die 36A is a tubular member installed downstream of the feed roller 32. The upper pipe die 36A guides the wire electrode 12 toward the upper wire guide 38A. The upper wire guide 38A is a wire guide for guiding the wire electrode 12 from the feed roller 32 toward the workpiece W. The upper wire guide 38A is movable in the horizontal direction. An upper electrode pin 40A is provided at the upper wire guide 38A (inside the upper wire guide 38A). The upper electrode pin 40A is connected to a power supply (not shown). This power supply applies a voltage pulse (voltage) to the wire electrode 12 via the upper electrode pin 40A.

Preferably, the feed roller 32 and the auxiliary roller 34A sandwich the wire electrode 12 (see FIG. 2). Thus, the possibility that the wire electrode 12 will come off from the feed roller 32 is reduced. The number of auxiliary rollers 34A is not limited to the example (two) shown in FIG. 2.

The supply system 26 further includes a torque motor 42 and a feed motor 44. The torque motor 42 is a motor that applies rotational torque to the wire bobbin 30. This rotational torque is directed in a direction that hampers the feeding of the wire electrode 12. Due to this rotational torque, a force (back tension) in the direction opposite to the feeding direction is applied to the wire electrode 12. The feed motor 44 is, for example, a servo motor. The feed motor 44 is connected to the feed roller 32. The feed motor 44 controls the rotation of the feed roller 32.

The feed motor 44 has a shaft 44a. The feed motor 44 is provided with a sensor 46A. The sensor 46A is, for example, a rotary encoder. The sensor 46A outputs a detection signal Si_{A} corresponding to the drive of the shaft 44a. The detection signal Si_{A} is input to the controller 16 (see FIG. 1).

The collecting system 28 includes a lower wire guide 38B, an auxiliary roller 34B, a lower pipe die 36B, a winding roller 48, and a pinch roller 50. The lower wire guide 38B is a wire guide for guiding the wire electrode 12 that has passed through the workpiece W toward the winding roller 48. The lower wire guide 38B is movable in the horizontal direction. The lower wire guide 38B is provided with a lower electrode pin 40B. The lower electrode pin 40B is connected to a power supply (not shown). This power supply applies a voltage to the wire electrode 12 via the lower electrode pin 40B. The lower electrode pin 40B and the upper electrode pin 40A may be connected to the same power supply. The auxiliary roller 34B is a rotatable roller. The auxiliary roller 34B is disposed between the lower wire guide 38B and the winding roller 48. The auxiliary roller 34B suppresses deflection of the wire electrode 12. The number of auxiliary rollers 34B is not particularly limited. The lower pipe die 36B is a tubular member installed downstream of the lower wire guide 38B. The lower pipe die 36B guides the wire electrode 12 to the winding roller 48. Each of the winding roller 48 and the pinch roller 50 is a rotatable roller. The wire electrode 12 that has passed through the lower wire guide 38B is laid over the winding roller 48. The pinch roller 50 holds the wire electrode 12, working together with the winding roller 48. Thus, the possibility of deflection of the wire electrode 12 is reduced.

The collecting system 28 further includes a winding motor 52. The winding motor 52 is, for example, a servo motor. The winding motor 52 is connected to the winding roller 48. The winding motor 52 controls the rotation of the winding roller 48.

The winding motor 52 has a shaft 52a. The winding motor 52 is provided with a sensor 46B. The sensor 46B is, for example, a rotary encoder. The sensor 46B outputs a detection signal Si_{B} corresponding to the drive of the shaft 52a. The detection signal Si_{B} is input to the controller 16 (see FIG. 1).

The controller 16 includes a motor drive device 54, a motor command device 56, and a wire-breakage position estimation device 58 (see FIG. 1). The motor drive device 54 drives the torque motor 42, the feed motor 44, and the winding motor 52. The motor command device 56 outputs a command signal Si_{O} to the motor drive device 54.

The motor drive device 54, the motor command device 56, and the wire-breakage position estimation device 58 will be described below. However, known techniques related to motor control may be applied to the motor drive device 54 and the motor command device 56. Therefore, with respect to the motor drive device 54 and the motor command device 56, explanations will be kept brief.

The motor command device 56 includes a processor (processors) and a memory (memories). Both the processor and the memory of the motor command device 56 are not shown. A predetermined program is input to the memory of the motor command device 56. The processor of the motor command device 56 executes the predetermined program. As a result, the motor command device 56 outputs a command signal Si_{O}. The command signal Si_{O} is a signal for specifying the rotational speeds of the torque motor 42, the feed motor 44, and the winding motor 52. The motor command device 56 can output a command signal Si_{O} for specifying the rotational speed of the torque motor 42, a command signal Si_{O} for specifying the rotational speed of the feed motor 44, and a command signal Si_{O} for specifying the rotational speed of the winding motor 52.

The motor drive device 54 suitably includes a motor amplifier (motor driver). The motor drive device 54 supplies a drive current to the torque motor 42, the feed motor 44, and the winding motor 52 based on an input command signal Siₒ. The torque motor 42, the feed motor 44, and the winding motor 52 are driven according to the supplied drive current.

The motor drive device 54 acquires the detection signal Si_{A} and the detection signal Si_{B}. The motor drive device 54 performs feedback control based on the detection signal Si_{A} and the detection signal Si_{B}. For example, the rotational speed of the feed motor 44 specified by the command signal Si_{O} may be different from the actual rotational speed of the feed motor 44. In this case, the motor drive device 54 adjusts the drive current supplied to the feed motor 44, based on the detection signal Si_{A}. In this way, the actual rotational speed of the feed motor 44 is brought close to the rotational speed designated by the command signal Si_{O}. Further, for example, the rotational speed of the winding motor 52 specified by the command signal Si_{O} may be different from the actual rotational speed of the winding motor 52. In this case, the motor drive device 54 adjusts the drive current supplied to the winding motor 52 based on the detection signal Si_{B}. Thus, the actual rotational speed of the winding motor 52 is brought close to the rotational speed designated by the command signal Si_{O}.

The motor command device 56 and the motor drive device 54 move the wire electrode 12 from the wire bobbin 30 to the collecting box 24 by driving the feed motor 44 and the winding motor 52. Further, the motor command device 56 and the motor drive device 54 control the torque motor 42 to apply a back tension to the wire electrode 12. The motor command device 56 and the motor drive device 54 appropriately control the feed motor 44, the winding motor 52, and the torque motor 42 so that the wire electrode 12 is stretched between the feed roller 32 and the winding roller 48.

An interelectrode gap g is formed between the stretched wire electrode 12 and the workpiece W (see FIG. 2). The wire electric discharge machine 10 applies a voltage to the wire electrode 12 via the upper electrode pin 40A and the lower electrode pin 40B, thereby generating electric discharge at the gap g. Further, the wire electric discharge machine 10 relatively moves the wire electrode 12 and the workpiece W while generating electric discharge at the gap g. In this way, the workpiece W is processed into a desired shape. In this regard, the controller 16 controls the movement of the table 20, the upper wire guide 38A, and the lower wire guide 38B, and controls the voltage applied to the wire electrode 12.

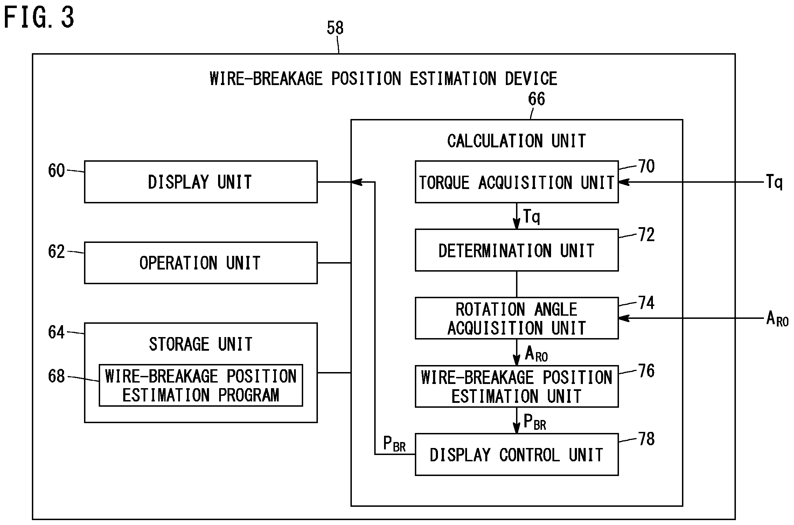

FIG. 3 is a block diagram of the wire-breakage position estimation device 58 according to the embodiment.

The wire-breakage position estimation device 58 includes a display unit 60, an operation unit 62, a storage unit 64, and a calculation unit 66 (see FIG. 3).

The display unit 60 is a display device for displaying information for the operator. The display unit 60 includes, for example, a display screen. The display unit 60 may display not only information about the wire-breakage position estimation device 58 but also information about the motor command device 56, for example. The display screen of the display unit 60 includes, for example, a liquid crystal panel. However, the material of the display screen of the display unit 60 is not limited to the liquid crystal. For example, the material of the display screen of the display unit 60 may include organic EL (OEL: Organic Electro-Luminescence).

The operation unit 62 is provided for the operator to issue an instruction to the wire-breakage position estimation device 58. The operation unit 62 includes, for example, a keyboard (a plurality of operation keys), a mouse, and a touch panel. The touch panel is installed on the display unit 60, for example. The operation unit 62 may receive not only the operator's instruction regarding the wire-breakage position estimation device 58 but also the operator's instruction regarding the motor command device 56.

The storage unit 64 includes a memory. For example, the storage unit 64 includes a RAM (Random Access Memory) and a ROM (Read Only Memory). The storage unit 64 and the motor command device 56 may share a memory (the memory of the motor command device 56 is not shown).

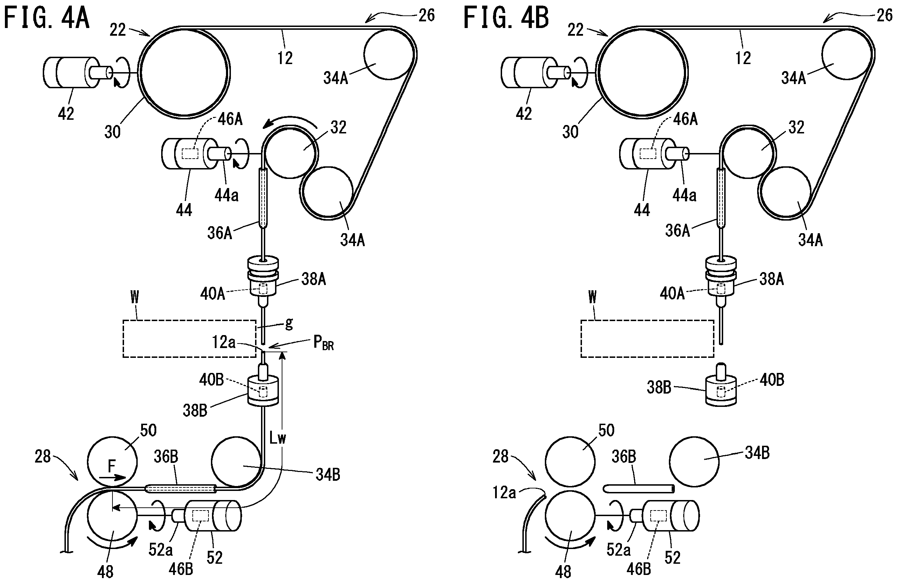

The storage unit 64 stores a wire-breakage position estimation program 68. The wire-breakage position estimation program 68 is a program for causing the wire-breakage position estimation device 58 to execute a wire-breakage position estimation method for reliably estimating a breakage position P_{BR} (see FIG. 4A) of the wire electrode 12.

The calculation unit 66 includes a processor (processors). For example, the calculation unit 66 includes a central processing unit (CPU) and a graphics processing unit (GPU). The calculation unit 66 and the motor command device 56 may share a processor (the processor of the motor command device 56 is not shown).

The calculation unit 66 includes a torque acquisition unit 70, a determination unit 72, a rotation angle acquisition unit 74, a wire-breakage position estimation unit 76, and a display control unit 78. The torque acquisition unit 70, the determination unit 72, the rotation angle acquisition unit 74, the wire-breakage position estimation unit 76, and the display control unit 78 are realized by the calculation unit 66 executing the wire-breakage position estimation program 68.

The torque acquisition unit 70 acquires rotational torque Tq (hereinafter simply referred to as torque Tq) of the shaft 52a of the winding motor 52. The torque Tq is calculated based on the detection signal Si_{B} of the sensor 46B by, for example, the motor drive device 54 or the motor command device 56. In this case, the torque acquisition unit 70 acquires the torque Tq from the motor drive device 54 or the motor command device 56. However, the torque acquisition unit 70 may calculate the torque Tq based on the detection signal Si_{B}. In this case, the torque acquisition unit 70 acquires the detection signal Si_{B}. The detection signal Si_{B} is obtained from, for example, the motor drive device 54.

The torque acquisition unit 70 inputs the acquired torque Tq to the determination unit 72.

Based on the torque Tq, the determination unit 72 determines whether the rear end 12a (FIG. 4A) of the wire electrode 12 has passed the winding roller 48. In connection with this determination, the relationship between the breakage of the wire electrode 12 and the torque Tq will be described below.

FIG. 4A is an exemplary diagram illustrating the feed mechanism 22 when the wire electrode 12 is broken.

During the feeding of the wire electrode 12, the wire electrode 12 and the winding roller 48 rub against each other. Therefore, a frictional force F acts on the wire electrode 12 (see FIG. 2). The frictional force F is a force (load) that prevents rotation of the shaft 52a. Therefore, the drive current of the winding motor 52 required to rotate the winding roller 48 at the specified rotational speed is larger when the frictional force F acts on the wire electrode 12 than when the frictional force F does not act on the wire electrode 12. In order to drive the winding motor 52 according to the command signal Si_{O}, the motor drive device 54 supplies a larger drive current to the winding motor 52 than is needed when the frictional force F does not act on the wire electrode 12. That is, in order to maintain the rotational speed and torque Tq of the winding motor 52 within a predetermined range, the motor drive device 54 supplies a larger drive current to the winding motor 52 than is needed when the frictional force F does not act. So long as the wire electrode 12 is being wound (reeled in) by the winding roller 48, the frictional force F is generated even after the wire electrode 12 is broken (see FIG. 4A).

FIG. 4B is an exemplary diagram illustrating the feed mechanism 22 after time has elapsed from FIG. 4A and a broken wire electrode 12 has passed the winding roller 48 and the pinch roller 50.

When the rear end 12a of the wire electrode 12 passes the winding roller 48, the frictional force F disappears (see FIG. 4B). Thus, the load applied to the winding roller 48 is reduced. Thereafter, the drive current of the winding motor 52 required to rotate the winding roller 48 at the specified rotational speed is reduced in accordance with the amount of reduced load. Therefore, the motor drive device 54 reduces the drive current supplied to the winding motor 52. Here, there is a time difference between when the frictional force F disappears and when the drive current of the winding motor 52 is changed. In this time zone, a large drive current with the frictional force F taken into consideration is supplied to the winding motor 52 on which the frictional force F is not acting.

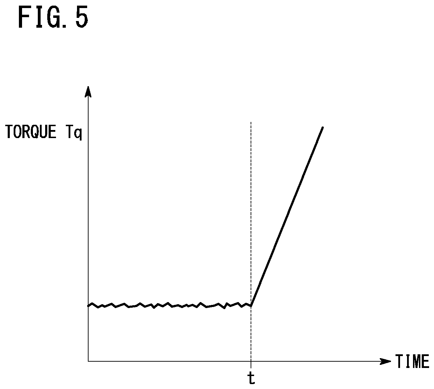

FIG. 5 is an exemplary graph (vertical axis: torque Tq, horizontal axis: time) illustrating in a simple manner the change in torque Tq of the winding motor 52 between before and after the rear end 12a of the wire electrode 12 passes the winding roller 48. A time point (hereinafter referred to as a wire passing time point) t in FIG. 5 indicates a time point at which the rear end 12a of the wire electrode 12 passes the winding roller 48 (between the winding roller 48 and the pinch roller 50).

In the graph of FIG. 5, the variation of torque Tq between FIGS. 4A-4B is illustrated in a simple manner. The torque Tq rapidly increases from the wire passage time point t. This is because a large drive current with the frictional force F taken into consideration is supplied to the winding roller 48 on which the frictional force F is not acting.

Based on the above, the determination unit 72 will be described again. When the wire electrode 12 is broken, the determination unit 72 determines, based on a rate of change in the torque Tq per unit time, whether the rear end 12a of the wire electrode 12 wound by the winding roller 48 has passed the winding roller 48. For example, the determination unit 72 determines that the rear end 12a has passed the winding roller 48 when the rate of change exceeds a predetermined threshold value after the occurrence of breakage. The threshold value is determined in advance based on experiments, for example.

The winding of the wire electrode 12 by the winding roller 48 means that the wire electrode 12 is fed out to the collecting box 24 in response to the rotation of the winding roller 48. It is unnecessary to move the wire electrode 12 backwards. The motor drive device 54 and the motor command device 56 control the winding motor 52 that is winding the wire electrode.

In order to make the above determination, the determination unit 72 acquires the breakage timing of the wire electrode 12. Here, the breakage timing of the wire electrode 12 is acquired by utilizing a known technique related to breakage detection. For example, the breakage detection means (tension sensor) disclosed in JP 2019-217559 A can be used.

The rotation angle acquisition unit 74 acquires a rotation angle A_{RO} of the winding motor 52. The rotation angle A_{RO} can be calculated based on the detection signal Si_{B}. The motor drive device 54 or the motor command device 56 may calculate the rotation angle A_{RO} based on the detection signal Si_{B}. The rotation angle acquisition unit 74 in FIG. 3 acquires the rotation angle A_{RO} from the motor drive device 54 or the motor command device 56.

In particular, the rotation angle acquisition unit 74 acquires a rotation angle (rotation amount) A_{RO} that is an angle of rotation during a period from when the wire electrode 12 is broken to when it is determined that the rear end 12a has passed the winding roller 48. The rotation angle A_{RO} between when the wire electrode 12 is broken and when it is determined that the rear end 12a has passed the winding roller 48 is input to the wire-breakage position estimation unit 76.

The wire-breakage position estimation unit 76 calculates the wire length L_{W} of the wire electrode 12 that passes the winding roller 48 during a period from when the wire electrode 12 is broken to when the rear end 12a passes the winding roller 48. The wire length L_{W} can be calculated based on the rotation angle A_{RO} input from the rotation angle acquisition unit 74 and on the diameter of the winding roller 48. Here, the winding roller 48 is known information. Instead of the diameter of the winding roller 48, the radius of the winding roller 48 may be used. Next, the wire-breakage position estimation unit 76 estimates the breakage position P_{BR} of the wire electrode 12 on the feeding path based on the wire length L_{W}. The wire-breakage position estimation unit 76 estimates, as the breakage position P_{BR}, a position that is the wire length L_{W} upstream from the winding roller 48 along the feeding path of the wire electrode 12 (see FIG. 4A).

The wire-breakage position estimation unit 76 outputs the estimation result (breakage position P_{BR}) to the display control unit 78.

The display control unit 78 controls the display unit 60. The display control unit 78 causes the display unit 60 to display the estimation result input from the wire-breakage position estimation unit 76. As a result, the operator knows the estimated breakage position P_{BR} through the display unit 60. The display control unit 78 displays a message indicating, for example, the breakage position P_{BR}. However, the display control unit 78 may display a predetermined icon at a position corresponding to the breakage position P_{BR} in a drawing that shows the configuration of the feed mechanism 22, for example.

The wire-breakage position estimation device 58 of the present embodiment estimates the breakage position P_{BR} of the wire electrode 12 based on the driving information of the winding motor 52 obtained from the sensor 46B. Therefore, the wire-breakage position estimation device 58 can estimate the breakage position P_{BR} anywhere in the entire range of the feeding path upstream of the winding roller 48. Further, the wire-breakage position estimation device 58 detects the position of the rear end 12a of the wire electrode 12 based on the detection signal Si_{B}. Therefore, neither separately providing the tip detection electrode nor making the wire electrode 12 run backwards after breakage is necessary in the present embodiment. Since the wire electrode 12 does not need to run backwards, there is no possibility that the wire electrode 12 will be tangled up because of the wire electrode 12 running backwards.

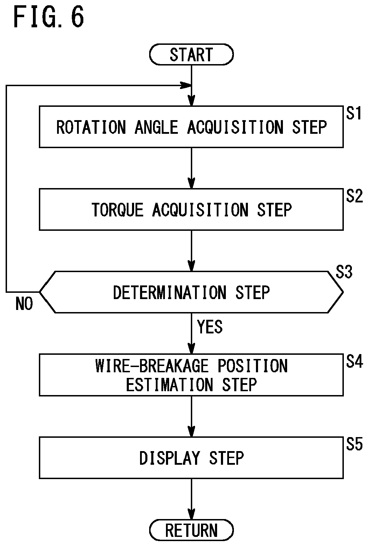

FIG. 6 is a flowchart illustrating the flow of the wire-breakage position estimation method according to the embodiment.

The wire-breakage position estimation method will be described below. The wire-breakage position estimation method is executed by the wire-breakage position estimation device 58. The wire-breakage position estimation method includes a rotation angle acquisition step S1, a torque acquisition step S2, a determination step S3, a wire-breakage position estimation step S4, and a display step S5 (see FIG. 6).

The wire-breakage position estimation method automatically starts when, for example, breakage of the wire electrode 12 occurs (START).

In the rotation angle acquiring step S1, the rotation angle acquisition unit 74 acquires the rotation angle A_{RO} of the winding motor 52 based on the detection signal Si_{B} of the sensor 46B. Here, the winding motor 52 continues the rotation for feeding out the wire electrode 12 toward the collecting box 24. The feed motor 44 may be stopped.

In the torque acquisition step S2, the torque acquisition unit 70 acquires the torque Tq of the winding motor 52 based on the detection signal Si_{B} of the sensor 46B.

In the determination step S3, the determination unit 72 determines, based on the torque Tq, whether the rear end 12a of the wire electrode 12 to be wound by the winding roller 48 has passed the winding roller 48.

As a result of the determination, when it is determined that the rear end 12a has passed the winding roller 48 (S3: YES), the process proceeds to the wire-breakage position estimation step S4. On the other hand, when it is determined that the rear end 12a has not yet passed the winding roller 48 (S3: NO), the rotation angle acquiring step S1 and the torque acquiring step S2 are executed again. Thus, there is acquired the rotation angle A_{RO} that is an angle of rotation between when the breakage occurs and when the rear end 12a of the wire electrode 12 passes the winding roller 48.

In the wire-breakage position estimation step S4, the wire-breakage position estimation unit 76 estimates the breakage position P_{BR} of the wire electrode 12.

In the display step S5, the display control unit 78 causes the display unit 60 to display the breakage position P_{BR} based on the estimation result of the breakage position P_{BR} performed in the wire-breakage position estimation step S4. This is the wire-breakage position estimation method of the present embodiment.

### [Modified Example]

The embodiment has been described above as one example of the present invention. Various modifications and improvements can be made to the above embodiment. It is also apparent from the claims that such modified or improved forms may fall within the technical scope of the present invention.

Modified examples according to the embodiment will be described below. The description that overlaps the embodiment will be omitted as much as possible in the following description. In the following description, the same reference numerals as those of the embodiment are assigned to the components already described in the embodiment unless otherwise specified.

### (Modified example 1)

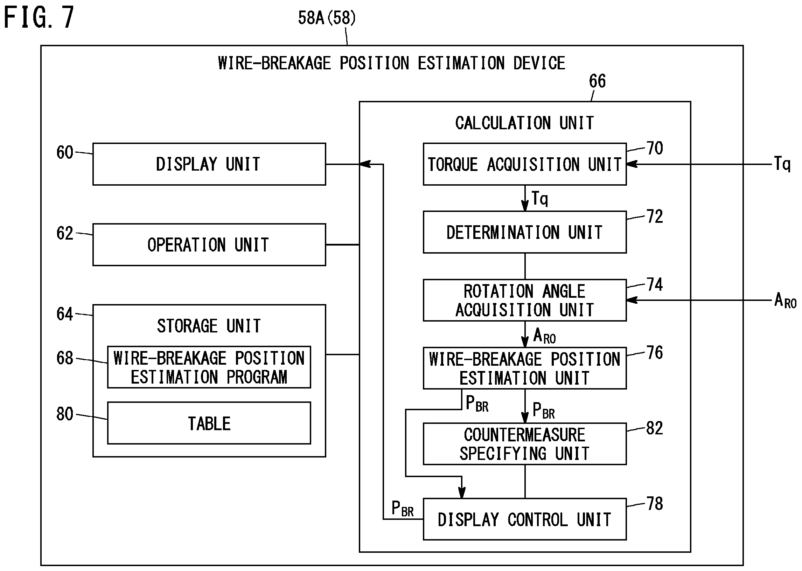

FIG. 7 is the configuration diagram of a wire-breakage position estimation device 58A (58) according to the first modified example.

The wire-breakage position estimating device 58A further includes a table 80 and a cause and countermeasure specifying unit 82.

The table 80 is a correspondence table in which the breakage position P_{BR} of the wire electrode 12, a cause of breakage, and a countermeasure for breakage are associated with each other. The table 80 is stored in the storage unit 64 in advance.

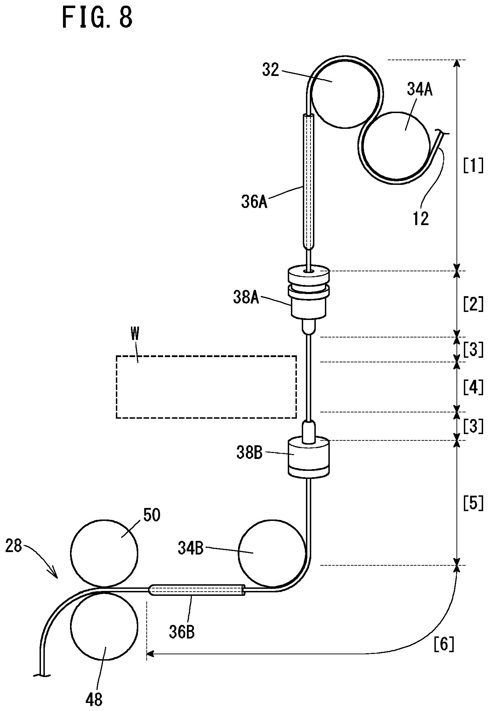

FIG. 8 is a diagram illustrating a plurality of sections defined on the feeding path of the wire electrode 12.

The feeding path of the wire electrode 12 is divided into a plurality of sections. FIG. 8 shows six sections [1] to [6] into which the feeding path is divided. The section [1] is a section from the feed roller 32 to the upper wire guide 38A. The section [2] is a section including the upper wire guide 38A. The section [3] is a section including the upper surface or the lower surface of the workpiece W. The section [4] is a section including a portion (central portion) excluding the upper surface and the lower surface of the workpiece W. The section [5] is a section including the lower wire guide 38B. The section [6] is a section including the downstream of the lower wire guide 38B. The above division is merely an example for the purpose of explanation. Therefore, the manner of dividing the feeding path and the number of sections are not limited to the example shown in FIG. 8.

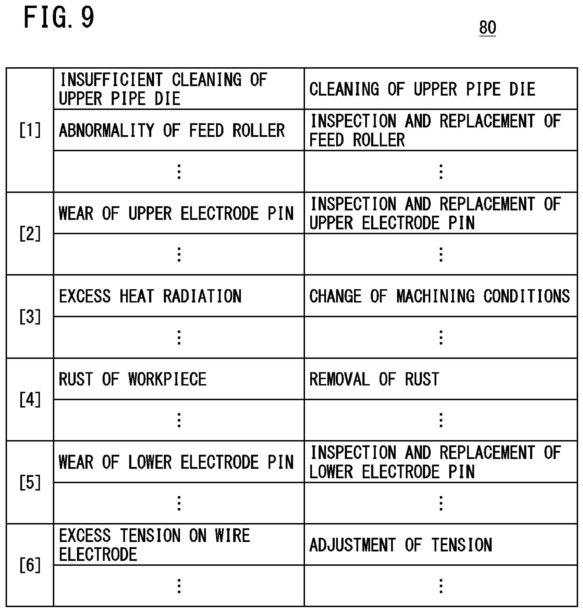

FIG. 9 is a diagram illustrating a table 80 defining the relationship of a plurality of sections of FIG. 8 with causes of breakage that may occur in each section and countermeasures for breakage.

The candidates for a cause of breakage of the wire electrode 12 are narrowed down based on the breakage position P_{BR}. For example, possible causes of breakage occurring in the section [1] include wear of the upper wire guide 38A (upper electrode pin 40A), insufficient cleaning of the upper pipe die 36A, and abnormality near the feed roller 32. Further, as countermeasures when the breakage occurs in the section [1], there are raised inspection of the upper wire guide 38A (upper electrode pin 40A), replacement of the upper wire guide 38A, cleaning of the upper pipe die 36A, inspection of the feed roller 32, and replacement of the feed roller 32.

In the table 80 of FIG. 9, a plurality of sections [1] to [6] are defined in the left-most column. In the table 80 of FIG. 9, the cause of breakage corresponding to each section is specified in the center column. In the table 80 of FIG. 9, the countermeasure corresponding to each section is defined in the right-most column. However, the table 80 in FIG. 9 is merely an example. Therefore, the specific contents of the table 80 are not limited to the example shown in FIG. 9.

The cause and countermeasure specifying unit 82 can be virtually realized by the calculation unit 66 executing a predetermined program, similar to the torque acquisition unit 70, for example.

The cause and countermeasure specifying unit 82 determines which of the sections [1] to [6] the breakage position P_{BR} estimated by the wire-breakage position estimation unit 76 belongs to. Further, the cause and countermeasure specifying unit 82 specifies a cause of breakage and a countermeasure for breakage corresponding to the breakage position P_{BR} based on the determination result. Here, the cause and countermeasure specifying unit 82 refers to the table 80 as necessary.

The display control unit 78 of the present modified example causes the display unit 60 to display not only the breakage position P_{BR} but also the cause and the countermeasure specified by the cause and countermeasure specifying unit 82. Thus, the operator can efficiently cope with the breakage of the wire electrode 12.

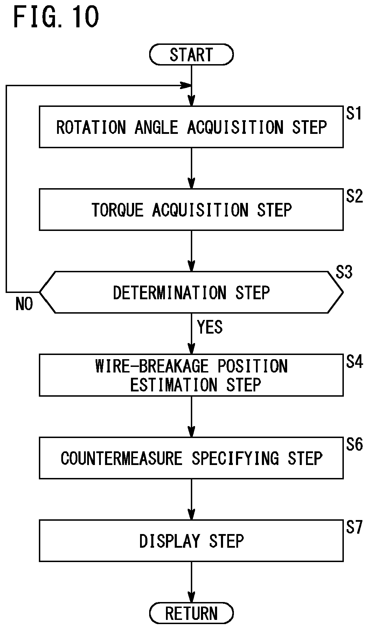

FIG. 10 is a flowchart illustrating a flow of the wire-breakage position estimation method according to the first modified example.

The wire-breakage position estimation device 58A can realize the wire-breakage position estimation method of FIG. 10. The wire-breakage position estimation method of FIG. 10 includes a rotation angle acquisition step S1, a torque acquisition step S2, a determination step S3, a wire-breakage position estimation step S4, a cause and countermeasure specifying step S6, and a display step S7.

Hereinafter, the cause and countermeasure specifying step S6 and the display step S7 will be described. The description of the rotation angle acquiring step S1 to the wire-breakage position estimating step S4 is omitted here (see the embodiment).

The cause and countermeasure specifying step S6 is executed after the wire-breakage position estimating step S4. In the cause and countermeasure specifying step S6, the cause and countermeasure specifying unit 82 specifies, based on the table 80, a countermeasure for breakage and a cause of breakage corresponding to the breakage position P_{BR} estimated in the wire-breakage position estimating step S4. Here, the cause and countermeasure specifying unit 82 may specify either one of the cause of breakage or the countermeasure.

The display step S7 is executed after the cause and countermeasure specifying step S6. In the display step S7, the display control unit 78 causes the display unit 60 to display the breakage position P_{BR}, the cause of breakage, and the countermeasure. In this way, the wire-breakage position estimation method of the present modification is completed (RETURN).

It should be noted that the table 80 may include only either one of the cause or the countermeasure corresponding to the breakage position P_{BR}. In this case, the cause and countermeasure specifying unit 82 specifies the cause or the countermeasure.

### (Modified example 2)

The determination unit 72 may determine whether the rear end 12a of the wire electrode 12 has passed the winding roller 48, based on whether the acquired torque Tq has deviated from a predetermined range concerning the torque Tq.

### (Modified example 3)

The torque acquisition unit 70 may substantially acquire the torque Tq by acquiring a physical quantity that changes according to the torque Tq. The physical quantity that changes according to the torque Tq is not particularly limited as long as it changes according to the torque Tq, but may be, for example, the drive current of the winding motor 52 or the rotational speed of the winding motor 52.

### (Modified example 4)

The wire-breakage position estimation device 58 may be an electronic device separate from the controller 16 (the motor command device 56 and the motor drive device 54). In this case, the wire-breakage position estimation device 58 acquires the torque Tq or the rotation angle A_{RO} from the controller 16, for example, via a network (by wire or wirelessly).

### (Modified example 5)

The above-described modified example may be appropriately combined as long as they do not contradict each other.

### [Invention Obtained from Embodiments]

The invention that can be understood from the above-described embodiments and modified examples will be described below.

### <First Invention>

A first invention is a wire-breakage position estimation device (58) for estimating the breakage position (P_{BR}) of a wire electrode (12) in a wire electric discharge machine (10), wherein the wire electric discharge machine includes a winding roller (48) that winds the wire electrode that has been fed out toward a workpiece (W) and has passed through the workpiece (W), a winding motor (52) that drives the winding roller, and a sensor (46B) that outputs a detection signal (Si_{B}) corresponding to the driving of a shaft (52a) of the winding motor, wherein the wire-breakage position estimation device includes a torque acquisition unit (70) that acquires the torque (Tq) of the winding motor based on the detection signal, a determination unit (72) that determines, when the wire electrode is broken, based on the torque whether the rear end (12a) of the wire electrode wound by the winding roller has passed the winding roller, a rotation angle acquisition unit (74) that acquires the rotation angle (A_{RO}) of the winding motor based on the detection signal, and a wire-breakage position estimation unit (76) that estimates the breakage position of the wire electrode based on the rotation angle of the winding motor from the time when the wire electrode is broken to a time when it is determined that the rear end of the wire electrode has passed the winding roller.

Thus, a wire-breakage position estimation device that reliably estimates the breakage position of a wire electrode while omitting a tip detection electrode is provided.

The determination unit may determine whether the rear end of the wire electrode has passed the winding roller, based on the rate of change in the torque per unit time. Thus, the rear end can be detected without depending on the front end detection electrode and without requiring the reverse travel of the wire electrode.

The determination unit may determine whether the rear end of the wire electrode has passed the winding roller, based on whether the acquired torque has deviated from a predetermined range with respect to the torque. Thus, the rear end can be detected without depending on the tip detection electrode and without requiring the reverse travel of the wire electrode.

The device may further include a table (80) in which a breakage position of the wire electrode is associated with at least one of a cause of breakage or a countermeasure for breakage, a cause and countermeasure specifying unit (82) that specifies, based on the table, at least one of the cause of breakage or the countermeasure corresponding to the breakage position estimated by the wire-breakage position estimation unit, and a display control unit (78) that causes a display unit (60) to display at least one of the specified cause of breakage or the specified countermeasure. As a result, the operator can efficiently deal with the breakage of the wire electrode.

The wire-breakage position estimation device may be provided in a controller (16) that controls the wire electric discharge machine.

### <Second Invention>

A wire-breakage position estimation method for estimating the breakage position (P_{BR}) of a wire electrode (12) in a wire electric discharge machine (10), wherein the wire electric discharge machine includes a winding roller (48) that winds the wire electrode that has been fed out toward a workpiece (W) and has passed through the workpiece, a winding motor (52) that drives the winding roller, and a sensor (46B) that outputs a detection signal (Si_{B}) corresponding to the driving of a shaft (52a) of the winding motor, and the wire-breakage position estimation method includes a rotation angle acquisition step (S1) for acquiring the rotation angle (A_{RO}) of the winding motor based on the detection signal (Si_{B}) of the sensor, a torque acquisition step (S2) for acquiring the torque (Tq) of the winding motor based on the detection signal of the sensor, a determination step (S3) for determining, when the wire electrode is broken, based on the torque whether the rear end (12a) of the wire electrode wound by the winding roller has passed the winding roller, and a wire-breakage position estimation step (S4) for estimating the breakage position of the wire electrode based on the rotation angle of the winding motor from the time when the wire electrode is broken to the time when it is determined that the rear end of the wire electrode has passed the winding roller.

Thus, a wire-breakage position estimation method for reliably estimating the breakage position of a wire electrode while omitting a tip detection electrode is provided.

## Claims

1. A wire-breakage position estimation device (58) for estimating a breakage position (P_{BR}) of a wire electrode (12) in a wire electric discharge machine (10),
wherein the wire electric discharge machine comprises:
a winding roller (48) that winds the wire electrode that has been fed out toward a workpiece (W) and has passed through the workpiece;
a winding motor (52) that drives the winding roller; and
a sensor (46B) that outputs a detection signal (Si_{B}) corresponding to driving of a shaft (52a) of the winding motor,
wherein the wire-breakage position estimation device includes:
a torque acquisition unit (70) that acquires torque (Tq) of the winding motor based on the detection signal;
a determination unit (72) that determines, when the wire electrode is broken, based on the torque, whether a rear end (12a) of the wire electrode wound by the winding roller has passed the winding roller;
a rotation angle acquisition unit (74) that acquires a rotation angle (A_{RO}) of the winding motor based on the detection signal; and
a wire-breakage position estimation unit (76) that estimates a breakage position of the wire electrode based on a rotation angle of the winding motor from a time when the wire electrode is broken to a time when it is determined that the rear end of the wire electrode has passed the winding roller.

2. The wire-breakage position estimation device according to claim 1, wherein
the determination unit determines whether the rear end of the wire electrode has passed the winding roller, based on a rate of change in the torque per unit time.

3. The wire-breakage position estimation device according to claim 1, wherein
the determination unit determines whether the rear end of the wire electrode has passed the winding roller, based on whether an acquired torque has deviated from a predetermined range concerning the torque.

4. The wire-breakage position estimation device according to any one of claims 1 to 3, further comprising:
a table (80) in which the breakage position of the wire electrode is associated with at least one of a cause of breakage or a countermeasure for breakage;
a cause and countermeasure specifying unit (82) that specifies, based on the table, at least one of the cause of breakage or the countermeasure for breakage corresponding to the breakage position estimated by the wire-breakage position estimation unit; and
a display control unit (78) that causes a display unit (60) to display at least one of a specified cause of breakage or a specified countermeasure for breakage.

5. The wire-breakage position estimation device according to any one of claims 1 to 4, wherein
the wire-breakage position estimation device is provided in a controller (16) that controls the wire electric discharge machine.

6. A wire-breakage position estimation method for estimating a breakage position (P_{BR}) of a wire electrode (12) in a wire electric discharge machine (10),
wherein the wire electric discharge machine comprises:
a winding roller (48) that winds the wire electrode that has been fed out toward a workpiece (W) and has passed through the workpiece;
a winding motor (52) that drives the winding roller; and
a sensor (46B) that outputs a detection signal (Si_{B}) corresponding to driving of a shaft (52a) of the winding motor,
the wire-breakage position estimation method includes:
a rotation angle acquiring step (S1) of acquiring a rotation angle (A_{RO}) of the winding motor based on a detection signal of the sensor;
a torque acquisition step (S2) of acquiring torque (Tq) of the winding motor based on the detection signal of the sensor;
a determination step (S3) of determining, when the wire electrode is broken, based on the torque whether a rear end (12a) of the wire electrode wound by the winding roller has passed the winding roller; and
a wire-breakage position estimation step (S4) of estimating a breakage position of the wire electrode based on a rotation angle of the winding motor from a time when the wire electrode is broken to a time when it is determined that the rear end of the wire electrode has passed the winding roller.
